(19) Europäisches Patentamt
European Patent Office
Office européen des brevets

(11) **EP 1 690 229 B1**

(12) **EUROPEAN PATENT SPECIFICATION**

(45) Date of publication and mention
of the grant of the patent:
**17.10.2012 Bulletin 2012/42**

(21) Application number: **04819710.7**

(22) Date of filing: **23.11.2004**

(51) Int Cl.:
***G06T 3/40*** *(2006.01)*        *H04N 5/262* *(2006.01)*

(86) International application number:
**PCT/FI2004/050172**

(87) International publication number:
**WO 2005/055139 (16.06.2005 Gazette 2005/24)**

(54) **METHOD AND APPARATUS FOR DOWNSCALING A DIGITAL MATRIX IMAGE**

VERFAHREN UND VORRICHTUNG ZUM HERUNTERSKALIEREN EINES DIGITALEN MATRIXBILDES

PROCEDE ET APPAREIL DE REDUCTION D'ECHELLE D'UNE IMAGE MATRICE NUMERIQUE

(84) Designated Contracting States:
**DE FR GB NL**

(30) Priority: **03.12.2003 FI 20035227**

(43) Date of publication of application:
**16.08.2006 Bulletin 2006/33**

(73) Proprietor: **Nokia Corporation**
**02150 Espoo (FI)**

(72) Inventors:
• **KALEVO, Ossi**
**37800 Toijala (FI)**
• **KAKKORI, Hannu**
**33200 Tampere (FI)**

(74) Representative: **Pursiainen, Timo Pekka et al**
**Tampereen Patenttitoimisto Oy**
**Hermiankatu 1 B**
**33720 Tampere (FI)**

(56) References cited:
**EP-A2- 0 513 516      EP-A2- 1 401 209**
**WO-A2-99/55013       US-A1- 2002 018 592**
**US-B1- 6 252 577      US-B1- 6 339 434**
**US-B1- 6 417 867      US-B1- 6 647 061**

**Description**

The invention relates to a method and apparatus for downscaling a digital matrix image using a selected ratio, in which the matrix image includes a large number of lines, each line including a large number of pixels, so that the intensity values of the pixels form the matrix, and in which the output matrix pixels formed by scaling correspond to the sub-groups of the original matrix, from the intensity values of the pixels of which an average is calculated in a selected manner for each pixel of the output matrix.

Camera sensors are used when using digital cameras to take individual images or video images. The image of the sensor can use various image formats, for example, RGB8;8:8, RGB5:6:5, YUV4:2:0 and a raw-Bayer image. When the image is shown in the viewfinder (VF), which usually has a lower resolution than the image sensor, the image must be formed in the sensor and scaled to be suitable for the resolution of the display. The image can also be zoomed (a smaller image from the sensor is cropped and then scaled) to the viewfinder. In zooming, there should be many stages, so that the result of the zooming will appear to be continuous. When video images are taken, the resolution of the video image is usually lower than the resolution of the sensor. Similar scaling will therefore also be required when videoing. Camera sensors can also be used equally well in portable devices as in cameras. Image scaling is needed, if the viewfinder image is running in real time on the display of a telephone or camera, or if a video image is being taken in real time.

Methods are known, in which the image is scaled (sub-sampled) using a low quality algorithm in the camera (poor image quality). The poorer quality is especially visible in the digital zoom mode of some DSCs (DSC = Digital Still Camera).

US publication 6,205,245 discloses one method, in which a colour image is scaled directly from the matrix of the sensor, in such a way that a pixel group, which is always processed at one time, is defined, more or less corresponding to each pixel of the final image.

Generally, the scaling of an image matrix $M_1$ x $N_1$ is scaled to a smaller size $M_2$ x $N_2$ as follows. The scaling ratios $M_2/M_1$ and $N_2/N_1$ determine the procedure in the calculation operation. If scaling takes place in real time, i.e. As a continuous flow, memory need not be reserved for the input matrix, only three memory lines being sufficient. Consider the data coming in the X lines. The first memory line sums the amount according to the scaling ration in the X direction at the same time as the value of each pixel is summer in the Y line memory. If the scaling ratio results in the number of pixels not being an integer, the value of the pixel at the limit is weighted and summed with the two adjacent input pixels. In the same way, pixel values are calculated according to the scaling ration into the Y line memory and, in the case of boundary pixels, they are divided weighted into two parts. When the counter set for the Y scaling ration shows that the Y line memory is full, it is emptied forwards, after which summing starts from the beginning.

If the scaling ratios are small (near to zero), several memory lines will be needed, but their size is small. If, on the other hand, the scaling ratios are large (near to unity), only a few memory lines will be needed, but their size is large. Thus, depending on the scaling ratio, a fairly constant amount of memory is needed, the amount of which is about 3 x $M_1$ for a single colour component. In a practical application, the whole memory needed for scaling is less than 4 x $M_1$ for a single colour component.

European Patent Application EP 0 513 516 A2 describes a two-stage approach for reducing the size of a digital image wherein in the first stage the digital input image is magnified to such a size that the downscaling in the second stage can be performed efficiently by a power of two shifting technique.

The invention is intended to improve the quality of the viewfinder or display image, by using separate scaling ratios and smooth zooming. In addition, it is desired to reduce the level of interference. By means of the invention, it is wished to process an image with nearly optimum quality, while simultaneously keeping the demands for memory and power consumption at an economical level.

The characterizing features of the method and apparatus according to the invention are stated in the accompanying claims. The invention is particularly suitable for hardware-based (HW) implementations. The quality of scaling is nearly optimal and the level of interference is reduced significantly.

By means of the invention, the following advantages are achieved:

- Permits high-resolution images to be downscaled to both a display and a videocoder.
- Minimizes amount of memory required, despite high-quality downscaling.

   ❖ High-frequency aliasing eliminated

   - lines and edges are represented correctly (no broken lines or jagged edges)
   - flickering of sharp lines and glimmering of high-contrast details eliminated.

- Noise level of output image attenuated.  ❖ Images can also be captured in dim/night conditions.

- Minimization of processing power requirement for high-quality images.

The quality of scaling is affected by the coarse and fine-scaling ratios. Quality is reduced if the pixels that are ready averaged in coarse scaling do not coincide with the fine-scaling limit, in which case they contain information from outside the output pixel.

In the following, the invention is examined with reference to the accompanying figures, which show some embodiments of the invention.

Figure 1        shows the solution in principle of the method according to the invention,
Figure 2a       shows a block diagram of one device solution,
Figure 2b       shows a block diagram on a second device solution,
Figure 2c       shows the scaling solution of Figure 2b at a circuit level,
Figure 3        shows a horizontal depiction of 5/8-scaling,
Figure 4a       shows a diagram of the division of the total ratio between the first and the second stages, when seeking to minimize calculation,
Figure 4b       shows a diagram of the division of the total ratio between the first and second stages, when seeking to minimize the amount of memory required,
Figure 4c       shows a diagram of the division of the total ratio between the first and second stages, when seeking to optimize mainly the quality of the image, but also the amount of calculation and memory required.

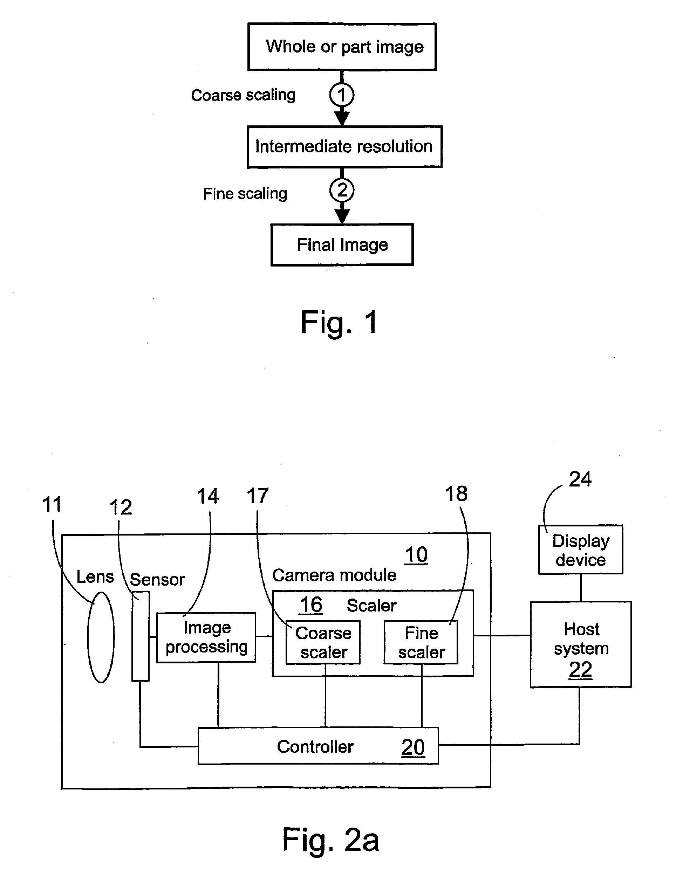

The method according to the invention includes two scaling stages, Figure 1. The first, coarse stage is simple and may comprise only the ratio 1/X. The next stage (fine) is more flexible, and may comprise the ratios Y/Z, in which Y < Z. X, Y, and Z are integers. The total scaling ration is the result of the scaling ratio in both stages. The smaller the first scaling ratio (Note: 1/3 < 1/2), the less memory will be required in the second stage. A smaller scaling ration in the first stage will also reduce the computational logistics and the total number of calculations. The first stage can be shown in an analog or digital form. The second stage defines the memory requirement. If the scaling ration is not directly 1/X, a better image quality will be achieved by using a smaller ratio in the second stage, but this will demand a larger memory.

The invention is particularly suitable for hardware-based applications, an example of which is the application according to Figure 2a. The camera module 10 is connected to a host system 22, which controls the display device 24 and the camera module. The camera module 10 includes particularly optics, i.e. a lens arrangement 11 (in practice, several lens), a sensor 12, an image-processing circuit 14, a scaling unit 16, and a controller 20. The image-processing circuit 14 reads, in a known manner, the sensor 12, thus creating a rapid data flow, which is led to the scaling unit 16, from which scaled data flow representing the selected image area is led to the host system 22. In the scaling unit 16, the data flow is first processed in a coarse scaler 17, from which the data flows relating to the intermediate image are led to a fine scaler 18, which makes the final scaling.

In one embodiment, the input and output units are separate units, due to the large data flow, each scaler having its own CPU and memory area on the same chip (not shown).

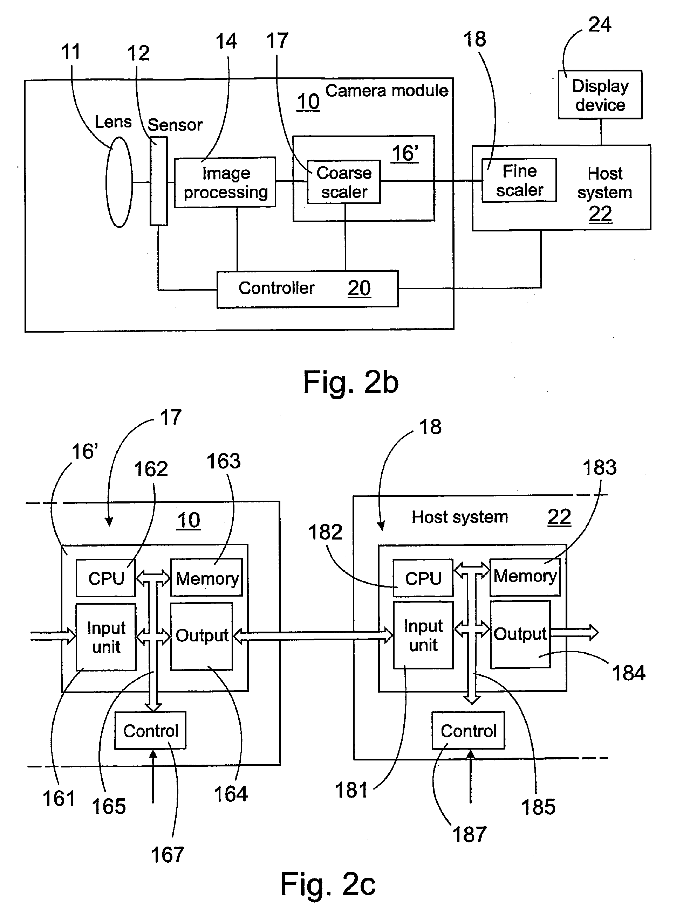

In Figure 2b, the same reference numbers as in Figure 2a are used for components that are functionally similar. In the solution of the figure, the actual camara module is slightly simpler, as the fine scaling 18 has been moved to the most system 22. The scaler 16' of the camera module includes only a coarse scaler 17. In this case the memory requirement is half a line in the coarse scaler (in the camera module) and three lines in the fine scaler (in the host module). For a sensor 1152x864, one line of memory represents Cx1152 words, in which C is the number of colour components (generally 3 - for RGB or YUV images). The length of the word depends on the accuracy of the calculation and is, for example, 2 or 4 bytes.

In one (fully digital embodiment) the construction of the scaler at the circuit level is according to Figure 2c. The coarse scaler 16' includes an input unit 161, a CPU 162, a memory 163, an output unit 164, and a controller 167, connected to an internal bus 165. The output unit 164 of this is connected to the input unit 181 of the fine scaler 18 (in the host system 22). The construction of the fine scaler 18 is similar, including the following components connection to a common bus 185: CPU 182, memory 183, output unit 184 and controller 187.

In this embodiment, scaling is performed using integers, which is much simpler to implement on a chip than floating-point calculation.

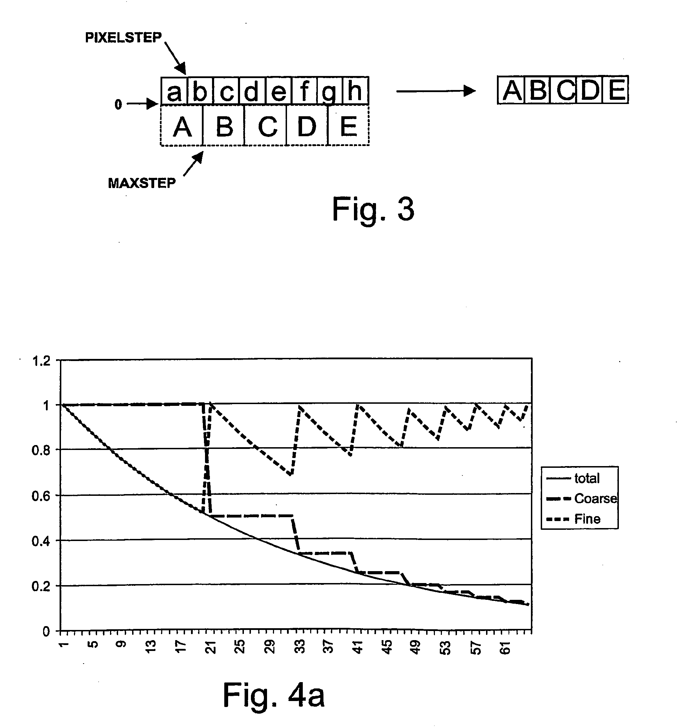

Figure 3 shows the significance of the variables MAXSTEP and PIXELSTEP in the second scaler 3. The example shows the horizontal stage, but scaling is applied in both directions.

The values of an output pixel can be calculated as follows from the pixels of the intermediate image (Fig. 3):

$$A = (P2(a) * a + P1(b) * b) / 256$$

$$B = (P2(b) * b + P(c) * c + P1(d) * d) / 256$$

$$C = (P2(d) * d + P1(e) * e) / 256$$

$$D = (P2(e) * e + P(f) * f + P1(g) * g) / 256$$

$$E = (P2(g) * g + P1(h) * h) / 256$$

The PIXELSTEP value can be defined for the scaling ratio 5/8:

$$Set\ MAXSTEP = 256$$

$$Tmp2 = (MAXSTEP * 5) / 8 = 160$$

$$PIXELSTEP = floor(Tmp2) = 160$$

The weighting coefficients can be defined as follows :

$$P1(a) = 0$$

$$P1(x) = MAXSTEP - P2(x-1)$$

*Conditional statement If (P1(x) > PIXELSTEP then*

$$P1(x+1) = P1(x) - PIXELSTEP\ and\ P(x) = PIXELSTEP$$

$$P2(x) = PIXELSTEP - P1(x)$$

And so that weighting coefficients of the example given above can be calculated :

$$P1(a) = 0$$

$$P2(a) = PIXELSTEP - P1(a) = 160 - 0 = 160$$

$$P1(b) = MAXSTEP - P2(a) = 256 - 160 = 96 <= 160\quad 96$$

$$P2(b) = PIXELSTEP - P1(b) = 160 - 96 = 64$$

$$P1(c) = MAXSTEP - P2(b) = 256 - 64 = 192 > 160$$

$$P(c) = PIXELSTEP = 160$$

$$P1(d) = P1(c) - PIXEL\ STEP = 192 - 160 = 32$$

$$P2(d) = PIXELSTEP - P1(d) = 160 - 32 = 128$$

$$P1(e) = MAXSTEP - P2(d) = 256 - 128 = 128 <= 160\quad 128$$

$$P2(e) = PIXELSTEP - P1(e) = 160 - 128 = 32$$

$$P1(f) = MAXSTEP - P2(e) = 256 - 32 = 224 > 160$$

$$P(f) = PIXELSTEP = 160$$

$$P1(g) = P1(f) - PIXELSTEP = 224 - 160 = \qquad 64$$

$$P2(g) = PIXELSTEP - P1(g) = 160 - 64 = 96$$

$$P1(h) = MAXSTEP - P2(g) = 256 - 96 = 160 <= 160\quad 160$$

$$Note!\ P2(h) = PIXELSTEP - P1(h) = 160 - 160 = 0$$

$$P1(i) = MAXSTEP - P2(h) = 256 - 0 > 160$$

$$P(i) = 160,\ P1(j) = 96$$

In the case of Figure 4a, the first stage scales the image as far as possible, using the ratio 1/X, in which X is an integer. The second stage carries out fine scaling, using the smallest possible amount of memory and minimum calculation. This means that the second scaling ratio is as large as possible (between [1/2, 1]) and thus three lines of memory are required.

The calculation is performed using the most advantageous integers. In the examples, the following concepts are used

- total scaling ratio Y/(X * Z) - marked SCRatio
- inverted total scaling ratio 1/SCRatio - marked IR
- function Floor() - take integer part (reject division remainder)
- function MAX()- select maximum value from list
- function Sqrt() - return square root
- function 2^() - return power of two
- logarithmic functions Log2() and Log10()
- auxiliary variables AVESKIP and PIXELSTEP, which are defined in the following:

AVESKIP:

IR = MAX(Hin / Hout, Vin / Vout), in which horizontal (H) and vertical (V) sizes are used.
AVESKIP = Floor(IR)

PIXELSTEP:
MAXSTEP = 256 (or 65536 if more precise pixel positioning is desired) PIXELSTEP = Floor((MAXSTEP * AVESKIP)/IR)
Calculation example, scaling ratio (SCRatio) 0,182 i.e. ITR = 5,5: AVESKIP = Floor(5,5) = 5
MAXSTEP = 256
PIXELSTEP = Floor (256 * 5 /5,5) = 232

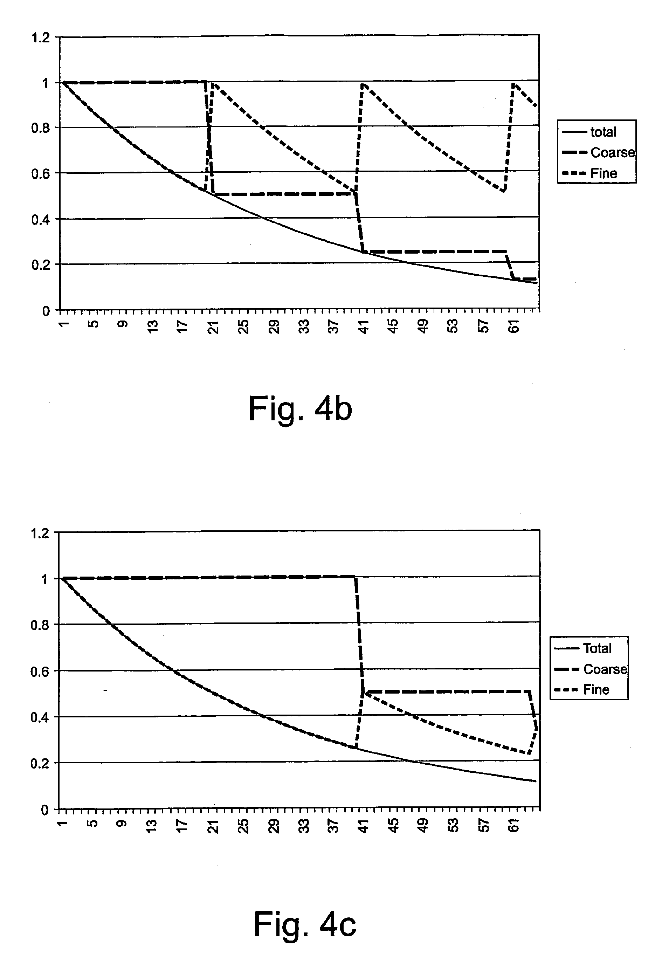

In the case of Figure 4b, the first stage scales the image as much as possible, using the ratio 1/X, in which X is the power of two (2, 4, 8, 16, 64 etc.). The second stage carries out fine scaling, using as little memory as possible. This means that the scaling ration is between [1/2, 1] and thus three lines of memory are required.

In the following table, the stages of the scaling of Figure 4b are shown are numerical values. Scaling of this kind is used in, for example, zooming, in which the resolution of the initial image is 128 x 96. In the size of the part image is greater, it is scaled to this size. In the table, the original 1-megapixel image 1152 x 864 is scaled using the ratio 0,111 (1/8 x 128/144, index 64). In Figure 4b, the index value on the X-axis runs in the range 1 - 64 and the scaling ratio between 1,0 - 0,111.

| X-size | Y-size | ratio X | X | Y | Z | index | X-size | Y-size | ratio X | X | Y | Z | index |
|---|---|---|---|---|---|---|---|---|---|---|---|---|---|
| 128 | 96 | 1,000 | 1 | 128 | 128 | 1 | | | | | | | |
| 132 | 99 | 0,970 | 1 | 128 | 132 | 2 | 386 | 290 | 0,332 | 2 | 128 | 193 | 33 |
| 137 | 103 | 0,934 | 1 | 128 | 137 | 3 | 400 | 300 | 0,320 | 2 | 128 | 200 | 34 |
| 141 | 106 | 0,908 | 1 | 128 | 141 | 4 | 416 | 312 | 0,308 | 2 | 128 | 208 | 35 |
| 146 | 110 | 0,877 | 1 | 128 | 146 | 5 | 430 | 322 | 0,298 | 2 | 128 | 215 | 36 |
| 151 | 114 | 0,848 | 1 | 128 | 151 | 6 | 444 | 334 | 0,288 | 2 | 128 | 222 | 37 |
| 157 | 118 | 0,815 | 1 | 128 | 157 | 7 | 460 | 346 | 0,278 | 2 | 128 | 230 | 38 |
| 162 | 122 | 0,790 | 1 | 128 | 162 | 8 | 474 | 354 | 0,270 | 2 | 128 | 237 | 39 |
| 168 | 126 | 0,762 | 1 | 128 | 168 | 9 | 492 | 368 | 0,260 | 2 | 128 | 246 | 40 |
| 174 | 131 | 0,736 | 1 | 128 | 174 | 10 | 512 | 384 | 0,250 | 4 | 128 | 128 | 41 |
| 180 | 135 | 0,711 | 1 | 128 | 180 | 11 | 528 | 396 | 0,242 | 4 | 128 | 132 | 42 |
| 187 | 140 | 0,684 | 1 | 128 | 187 | 12 | 548 | 412 | 0,234 | 4 | 128 | 137 | 43 |
| 193 | 145 | 0,663 | 1 | 128 | 193 | 13 | 564 | 424 | 0,227 | 4 | 128 | 141 | 44 |
| 200 | 150 | 0,640 | 1 | 128 | 200 | 14 | 584 | 440 | 0,219 | 4 | 128 | 146 | 45 |
| 208 | 156 | 0,615 | 1 | 128 | 208 | 15 | 604 | 456 | 0,212 | 4 | 128 | 151 | 46 |
| 215 | 161 | 0,595 | 1 | 128 | 215 | 16 | 628 | 472 | 0,204 | 4 | 128 | 157 | 47 |
| 222 | 167 | 0,577 | 1 | 128 | 222 | 17 | 648 | 488 | 0,198 | 4 | 128 | 162 | 48 |
| 230 | 173 | 0,557 | 1 | 128 | 230 | 18 | 672 | 504 | 0,190 | 4 | 128 | 168 | 49 |
| 237 | 177 | 0,540 | 1 | 128 | 237 | 19 | 696 | 524 | 0,184 | 4 | 128 | 174 | 50 |
| 246 | 184 | 0,520 | 1 | 128 | 246 | 20 | 720 | 540 | 0,178 | 4 | 128 | 180 | 51 |
| 256 | 192 | 0,500 | 2 | 128 | 128 | 21 | 748 | 560 | 0,171 | 4 | 128 | 187 | 52 |
| 264 | 198 | 0,485 | 2 | 128 | 132 | 22 | 772 | 580 | 0,166 | 4 | 128 | 193 | 53 |
| 274 | 206 | 0,467 | 2 | 128 | 137 | 23 | 800 | 600 | 0,160 | 4 | 128 | 200 | 54 |
| 282 | 212 | 0,454 | 2 | 128 | 141 | 24 | 832 | 624 | 0,154 | 4 | 128 | 208 | 55 |
| 292 | 220 | 0,438 | 2 | 128 | 146 | 25 | 860 | 644 | 0,149 | 4 | 128 | 215 | 56 |
| 302 | 228 | 0,424 | 2 | 128 | 151 | 26 | 888 | 668 | 0,144 | 4 | 128 | 222 | 57 |
| 314 | 236 | 0,408 | 2 | 128 | 157 | 27 | 920 | 692 | 0,139 | 4 | 128 | 230 | 58 |
| 324 | 244 | 0,395 | 2 | 128 | 162 | 28 | 948 | 708 | 0,135 | 4 | 128 | 237 | 59 |
| 336 | 252 | 0,381 | 2 | 128 | 168 | 29 | 984 | 736 | 0,130 | 4 | 128 | 246 | 60 |
| 348 | 262 | 0,368 | 2 | 128 | 174 | 30 | 1024 | 768 | 0,125 | 8 | 128 | 128 | 61 |
| 360 | 270 | 0,356 | 2 | 128 | 180 | 31 | 1056 | 792 | 0,121 | 8 | 128 | 132 | 62 |
| 374 | 280 | 0,342 | 2 | 128 | 187 | 32 | 1104 | 832 | 0,116 | 8 | 128 | 138 | 63 |
| | | | | | | | 1152 | 864 | 0,111 | 8 | 128 | 144 | 64 |

In this case too, the calculation is performed using integers, so that in the example (Figure 3) the axiliary variables MAXSTEP, AVESKIP, and PIXELSTEP, which are defined in the following, are used:

AVESKIP:

Inverted total scaling ratio IR = MAX(Hin / Hout, Vin / Vout), in which horizontal (H) and vertical (V) sizes are used.
SKIP = Floor(Log2(IR))
AVESKIP = 2^SKIP
PIXELSTEP:
MAXSTEP = 256 (or 65536 if more precise pixel positioning is desired) PIXELSTEP = Floor((MAXSTEP * AVESKIP) / IR) Calculation example, ITR = 5,5:
SKIP = Floor (LOG2(ITR)) = Floor (2,46) = 2
AVESKIP = 2^2 = 4
PIXELSTEP = Floor (256 * 4 /5,5) = 186

In the case of Figure 4c, it is sought to set the first and second-stage scaling ratios to be equal, in which case 1/X is approximately Y/Z. The memory and processing requirements will then be reasonable and the image quality nearly optimal.

The integer calculation auxiliary variables AVESKIP and PIXELSTEP are defined in the following:

AVESKIP:

Inverted total scaling ratio IR = MAX(Hin / Hout, Vin / Vout), in which horizontal (H) and vertical (V) sizes are used.
AVESKIP = Floor(Sqrt(IR))
PIXELSTEP:
MAXSTEP = 256 (or 65536, if more precise pixel positioning is desired)
PIXELSTEP = Floor(MAXSTEP * AVESKIP) / IR) Calculation example 3, ITR = 5,5:
AVESKIP = Floor (Sqrt (5,5)) = 2
MAXSTEP = 256
PIXELSTEP = Floor (256 * 2 /5,5) = 93

In cases in which the total scaling ratio is on 1/X, AVESKIP=X, the second stage is bypassed.

In most applications, scaling is made directly to the sensor circuit, using a suitable processor unit. The silicon area of such a circuit (ASIC) can be reduced to a usable level using a scaling method disclosed above, compared to an optimal scaling method. With the aid of the invention, it is possible to minimize the amount of line memory on the chip. This is because the area of the silicon determines the costs of the chip and is a central cost factor in portable camera solutions. The invention permits smaller cameras than previously and an increased dynamic range. The coded image size is smaller for the same quality parameters and is suitable for both separate images and video images.

The examples above are mainly for hardware-implemented camera sensors, but the invention can also be applied outside of the sensors, for example, by means of software in a PC. The camera sensor is suitable for use, not only in actual cameras, but also in mobile telephones (generally in mobile stations).

**Claims**

1. A method for downscaling a digital matrix image, using a selected ratio R, in which the matrix image includes a large number of lines, each line including a large number of pixels, so that the intensity values of the pixels form the matrix, and in which the output matrix pixels formed by scaling correspond to sub-groups of the original matrix, from the intensity values of the pixels of which an average is calculated for each pixel of the output matrix, **characterized in that** three integers X, Y, and Z are selected in such a way that

   - the scaling ratio R corresponds approximately to the equation Y/(Z*X), in which Y < Z, and
   - scaling is performed in two stages, of which
   - in the first stage, the matrix is scaled using the ratio 1/X, thus creating the pixels of an intermediate matrix and, in the second stage, the each pixel of the intermediate matrix is scaled using the ratio Y/Z.

2. A method according to Claim 1, **characterized in that** the second scaling is performed, after the first scaling, to the pixel group calculated for the intermediate matrix, without completing the calculation of the entire intermediate matrix.

3. A method according to Claim 1 or 2, **characterized in that**, in order to minimize the calculation process, in the first scaling the integer X is selected to be as great as possible, according to the integers maximums selected for Y and Z and the selected total ratio R.

4. A method according to Claim 1 or 2, **characterized in that**, in order to minimize the amount of memory required in the second scaling, in the first scaling the integer X is selected to be as great as possible as the power of two.

5. A method according to Claim 1 or 2, **characterized in that**, in order to optimize the image quality, the integers X, Y, and Z are set in such a way that 1/X is approximately Y/Z.

6. An apparatus for downscaling a digital matrix image by a selected ratio R, in which the apparatus includes a first memory area for recording the matrix image to be scaled, a second memory area for processing, and a third memory area for the output image matrix, a central unit (CPU) for performing processing, and in which the matrix image includes a large number are lines, each line including a large number of pixels, so that the intensity values of the pixels form the matrix, and i which the pixels of the output matrix formed by scaling correspond to the sub-groups of the original matrix, from the intensity values of the pixels of which an average is calculated for each pixel of the output matrix, **characterized in that** the apparatus is arranged to process the matrix image in two stages, in the first stage of which the matrix is scaled using the ratio 1/X, thus creating the pixels of the intermediate matrix for the second memory area, and in the second stage each pixel of the intermediate matrix is scaled using the ratio Y/Z, and that the said integers X, Y, and Z meet the conditions:

- the scaling ratio R corresponds approximately to the equation Y/(Z*X), and
- Y < Z.

7. An apparatus according to Claim 6, **characterized in that** the apparatus in integrated in connection with the image sensor (12) of a camera.

8. An apparatus according to Claim 7 and incorporating a host system (22), **characterized in that** the coarse scaler (17) is integrated in connection with the image sensor of a camera and the fine scaler (18) is integrated in the host system (22).

9. An apparatus according to Claims 6 or 7, **characterized in that** the apparatus includes a scaler unit (16), in which there are separate processors (CPUs) for the coarse and fine scalers (17,18).

10. An apparatus according to any of Claims 6 - 9, **characterized in that** the apparatus includes a memory for the scaling function of at most 4 image-sensor lines for each colour component.

11. An apparatus according to any of Claims 6 - 10, **characterized in that** the apparatus is fitted to a mobile station.

**Patentansprüche**

1. Verfahren zum Herunterskalieren eines digitalen Rasterbildes ("Matrix-Bildes") unter Verwendung eines ausgewählten Verhältnisses R, wobei das Rasterbild eine große Anzahl von Linien umfasst, wobei jede Linie eine große Anzahl von Pixeln umfasst, so dass die Intensitätswerte der Pixel das Raster bilden, und wobei die Ausgangsrasterpixel, die durch das Skalieren gebildet werden, Teilgruppen des ursprünglichen Rasters entsprechen, aus den Intensitätswerten der Pixel desselben für jeden Pixel des Ausgangsrasters ein Mittelwert berechnet wird, **dadurch gekennzeichnet, dass** drei Ganzzahlen X, Y und Z derart ausgewählt werden, dass

- das Skalierungsverhältnis R ungefähr der Gleichung Y/(Z*X) entspricht, wobei Y < Z, und
- das Skalieren in zwei Phasen ausgeführt wird, wobei
- in der ersten Phase das Raster unter Verwendung des Verhältnisses 1/X skaliert wird, wodurch die Pixel eines Zwischenrasters erstellt werden, und in der zweiten Phase jeder Pixel des Zwischenrasters unter Verwendung des Verhältnisses Y/Z skaliert wird.

2. Verfahren nach Anspruch 1, **dadurch gekennzeichnet, dass** das zweite Skalieren nach dem ersten Skalieren an der Pixelgruppe, die für das Zwischenraster berechnet wurde, ausgeführt wird, ohne die Berechnung des gesamten Zwischenrasters zu beenden.

3. Verfahren nach Anspruch 1 oder 2, **dadurch gekennzeichnet, dass** zum Minimieren des Rechenprozesses bei der ersten Skalierung die Ganzzahl X ausgewählt wird, um gemäß den ganzzahligen Maxima, die für Y und Z ausgewählt werden, und dem ausgewählten Gesamtverhältnis R möglichst groß zu sein.

**4.** Verfahren nach Anspruch 1 oder 2, **dadurch gekennzeichnet, dass** zum Minimieren der Speichermenge, die bei der zweiten Skalierung benötigt wird, bei der ersten Skalierung die Ganzzahl X ausgewählt wird, um als Zweierpotenz möglichst groß zu sein.

**5.** Verfahren nach Anspruch 1 oder 2, **dadurch gekennzeichnet, dass** zum Optimieren der Bildqualität die Ganzzahlen X, Y und Z derart eingestellt sind, dass 1/X ungefähr Y/Z ist.

**6.** Gerät zum Herunterskalieren eines digitalen Rasterbildes um ein ausgewähltes Verhältnis R, wobei das Gerät einen ersten Speicherbereich zum Aufzeichnen des zu skalierenden Rasterbildes, einen zweiten Speicherbereich zum Verarbeiten und einen dritten Speicherbereich für das Ausgangsbildraster und eine Zentraleinheit (CPU) zum Ausführen der Verarbeitung umfasst, und wobei das Rasterbild eine große Anzahl von Linien umfasst, wobei jede Linie eine große Anzahl von Pixeln umfasst, so dass die Intensitätswerte der Pixel das Raster bilden, und wobei die Pixel des Ausgangsrasters, die durch das Skalieren gebildet werden, den Teilgruppen des ursprünglichen Rasters entsprechen, aus den Intensitätswerten der Pixel desselben für jeden Pixel des Ausgangsrasters ein Mittelwert berechnet wird, **dadurch gekennzeichnet, dass** das Gerät angeordnet ist, um das Rasterbild in zwei Phasen zu verarbeiten, wobei in der ersten Phase derselben das Raster unter Verwendung des Verhältnisses 1/X skaliert wird, wodurch die Pixel des Zwischenrasters erstellt werden, und in der zweiten Phase jeder Pixel des Zwischenrasters unter Verwendung des Verhältnisses Y/Z skaliert wird, und dass die Ganzzahlen X, Y und Z folgende Bedingungen erfüllen:

- das Skalierungsverhältnis R entspricht ungefähr der Gleichung Y/(Z*X), und
- Y < Z.

**7.** Gerät nach Anspruch 6, **dadurch gekennzeichnet, dass** das Gerät in Verbindung mit dem Bildsensor (12) einer Kamera integriert ist.

**8.** Gerät nach Anspruch 7 und umfassend ein Host-System (22), **dadurch gekennzeichnet, dass** der grobe Skalierer (17) in Verbindung mit dem Bildsensor einer Kamera integriert ist und der feine Skalierer (18) in dem Host-System (22) integriert ist.

**9.** Gerät nach Anspruch 6 oder 7, **dadurch gekennzeichnet, dass** das Gerät eine Skalierungseinheit (16) umfasst, bei der es getrennte Prozessoren (CPU) für die groben und feinen Skalierer (17, 18) gibt.

**10.** Gerät nach einem der Ansprüche 6 bis 9, **dadurch gekennzeichnet, dass** das Gerät einen Speicher für die Skalierungsfunktion von höchstens 4 Bildsensorlinien für jede Farbkomponente umfasst.

**11.** Gerät nach einem der Ansprüche 6 bis 10, **dadurch gekennzeichnet, dass** das Gerät eine Mobilstation ausstattet.

## Revendications

**1.** Procédé destiné à mettre en oeuvre une réduction d'échelle d'une image matricielle numérique, en utilisant un rapport R sélectionné, dans lequel l'image matricielle comprend un grand nombre de lignes, chaque ligne comprenant un grand nombre de pixels, de sorte que les valeurs d'intensité des pixels forment la matrice, et dans lequel les pixels de la matrice générée en sortie formés par la mise à l'échelle correspondent à des sous-groupes de la matrice d'origine, à partir des valeurs d'intensité des pixels dont une moyenne est calculée pour chaque pixel de la matrice générée en sortie, **caractérisé en ce que** trois nombres entiers X, Y, et Z sont sélectionnés de sorte que :

- le rapport de mise à l'échelle R correspond approximativement à l'équation Y / (Z * X), dans laquelle Y < Z ; et
- la mise à l'échelle est mise en oeuvre en deux étapes, où
- dans la première étape, la matrice est mise à l'échelle en utilisant le rapport 1 / X, créant par conséquent les pixels d'une matrice intermédiaire et, dans la deuxième étape, chaque pixel de la matrice intermédiaire est mis à l'échelle en utilisant le rapport Y / Z.

**2.** Procédé selon la revendication 1, **caractérisé en ce que** la seconde mise à l'échelle est mise en oeuvre, suite à la première mise à l'échelle, sur le groupe de pixels calculé pour la matrice intermédiaire, sans terminer le calcul de l'ensemble de la matrice intermédiaire.

**3.** Procédé selon la revendication 1 ou 2, **caractérisé en ce que**, afin de minimiser le processus de calcul, dans la première mise à l'échelle, le nombre entier X est sélectionné comme étant aussi grand que possible, selon les entiers maximums sélectionnés pour Y et Z et le rapport total R sélectionné.

**4.** Procédé selon la revendication 1 ou 2, **caractérisé en ce que**, afin de minimiser la quantité de mémoire requise dans la seconde mise à l'échelle, dans la première mise à l'échelle, le nombre entier X est sélectionné comme étant aussi grand que possible en tant que puissance deux.

**5.** Procédé selon la revendication 1 ou 2, **caractérisé en ce que**, afin d'optimiser la qualité d'image, les nombres entiers X, Y et Z sont définis de sorte que 1 / X est approximativement égal à Y / Z.

**6.** Dispositif destiné à mettre en oeuvre une réduction d'échelle d'une image matricielle numérique selon un rapport R sélectionné, dans lequel le dispositif comprend une première zone de mémoire pour stocker l'image matricielle devant être mise à l'échelle, une seconde zone de mémoire destinée au traitement, et une troisième zone de mémoire pour la matrice d'images générée en sortie, une unité centrale de traitement (CPU) en vue de mettre en oeuvre un traitement, et dans lequel l'image matricielle comprend un grand nombre de lignes, chaque ligne comprenant un grand nombre de pixels, de sorte que les valeurs d'intensité des pixels forment la matrice, et dans lequel les pixels de la matrice générée en sortie formés par la mise à l'échelle correspondent aux sous-groupes de la matrice d'origine, à partir des valeurs d'intensité des pixels dont une moyenne est calculée pour chaque pixel de la matrice générée en sortie, **caractérisé en ce que** le dispositif est agencé de manière à traiter l'image matricielle en deux étapes, où, dans la première étape, la matrice est mise à l'échelle en utilisant le rapport 1 / X, créant par conséquent les pixels de la matrice intermédiaire pour la seconde zone de mémoire, et dans la seconde étape, chaque pixel de la matrice intermédiaire est mis à l'échelle en utilisant le rapport Y / Z, et **en ce que** lesdits nombre entiers X, Y et Z satisfont aux conditions ci-dessous :

- le rapport de mise à l'échelle R correspond approximativement à l'équation Y / (Z * X), et
- Y < Z.

**7.** Dispositif selon la revendication 6, **caractérisé en ce que** le dispositif est intégré conjointement au capteur d'image (12) d'une caméra.

**8.** Dispositif selon la revendication 7, et intégrant un système hôte (22), **caractérisé en ce que** le module de mise à l'échelle grossière (17) est intégré conjointement au capteur d'image d'une caméra et le module de mise à l'échelle fine (18) est intégré dans le système hôte (22).

**9.** Dispositif selon les revendications 6 ou 7, **caractérisé en ce que** le dispositif comprend une unité de mise à l'échelle (16) dans laquelle il existe des processeurs (CPU) distincts pour le module de mise à l'échelle grossière et le module de mise à l'échelle fine (17, 18).

**10.** Dispositif selon l'une quelconque des revendications 6 à 9, **caractérisé en ce que** le dispositif inclut une mémoire pour la fonction de mise à l'échelle de tout au plus 4 lignes de capteur d'image pour chaque composante chromatique.

**11.** Dispositif selon l'une quelconque des revendications 6 à 10, **caractérisé en ce que** le dispositif est installé dans une station mobile.

```
┌─────────────────────────────┐
│     Whole or part image     │
└─────────────────────────────┘
                 │
Coarse scaling   ①
                 ▼
┌─────────────────────────────┐
│   Intermediate resolution   │
└─────────────────────────────┘
                 │
Fine scaling     ②
                 ▼
┌─────────────────────────────┐
│         Final Image         │
└─────────────────────────────┘
```

# Fig. 1

24

11    12    14    17                    18

```
                                                    ┌──────────┐
                                                    │ Display  │
                                                    │  device  │
                                                    └──────────┘
┌──────────────────────────────────────────────┐        │
│              Camera module    10               │        │
│                                                │   ┌──────────┐
│  Lens  Sensor         16    Scaler             │   │  Host    │
│                   ┌───────────────────────┐    │   │ system   │
│              ┌─────────┐ ┌──────┐ ┌──────┐│    │   │   22     │
│         ◯    │  Image  │ │Coarse│ │ Fine ││    │   └──────────┘
│              │processing│ │scaler│ │scaler││    │
│              └─────────┘ └──────┘ └──────┘│    │
│                   └───────────────────────┘    │
│         ┌──────────────────────────────────┐   │
│         │    Controller          20         │───┘
│         └──────────────────────────────────┘
└──────────────────────────────────────────────┘
```

# Fig. 2a

Fig. 2b

Fig. 2c

Fig. 3

Fig. 4a

Fig. 4b

Fig. 4c

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6205245 B
- EP 0513516 A2